# EUROPEAN PATENT SPECIFICATION

(11) **EP 0 492 843 B1**
(45) Date of publication and mention of the grant of the patent: **16.08.1995**
(21) Application number: 91311279.3
(22) Date of filing: 04.12.1991
(51) Int. Cl.: A01N 43/80, A01N 25/22

(54) **Stable, solid form antimicrobial compositions comprising 3-isothiazolones**
3-Isothiazolone enthaltende stabile antimikrobielle Zusammensetzungen in fester Form
Compositions antimicrobielles stables, sous forme solide, comprenant des 3-isothiazolones

(30) Priority: 10.12.1990 US 625265
(43) Date of publication of application: 01.07.1992
(73) Proprietor: ROHM AND HAAS COMPANY, Philadelphia Pennsylvania 19105 (US)
(72) Inventor: Redlich, George Harvey, Norristown, Pennsylvania 19403 (US); Willingham, Gary Lewis, Glenside, Pennsylvania 19038 (US)
(74) Representative: Angell, David Whilton

(56) References cited:
- EP-A- 0 106 562
- EP-A- 0 106 563
- EP-A- 0 407 024
- GB-A- 2 200 846

## Description

This invention concerns stable, solid antimicrobial compositions comprising 3-isothiazolones.

U.S.-A-4,552,591, Millar, shows 3-isothiazolones absorbed on a particulate solid (diatomaceous earth) for oil field fluid applications.

EP-A-106,562 of April 25,1984 shows similar solid formulations to Millar.

EP-A-106,563 of April 25,1984 shows stable, non-irritating, slow-release compositions containing 3-isothiazolones, an inert filler, and a high-melting solid, wax-like binder.

It is an object of the present invention to provide 3-isothiazolones in solid, stable form, which are safe to handle, convenient to use and stable.

A further object is to provide optionally salt-free, "stabilizer-free," 3-isothiazolone microbicide compositions which are in solid form.

Accordingly the present invention provides in one aspect a composition comprising a 3-isothiazolone compound and a carrier which stabilizes said 3-isothiazolone against chemical decomposition, said carrier being solid at room temperature, water soluble, and comprising mone or more of polysaccharide polymer, derivatized cellulose polymers, polymers and copolymers of ethylene oxide and propylene oxide, polyurethane polymers having alternating hydrophobic and hydrophylic moieties, poly(maleic anhydride/methyl vinyl ether), polymerthacrylic acid, or naphthalene formaldehyde condensates. . Preferably the 3-isothiazolones are of the formula 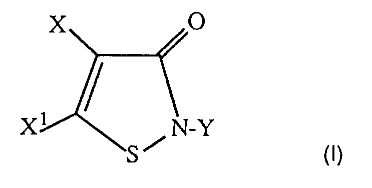
wherein
Y is a (C₁-C₁₈)alkyl or (C₃-C₁₂), preferably (C₅-C₈), cycloalkyl each optionally with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted (C₂-C₈), preferably (C₂-C₄) alkenyl or alkynyl; a (C₇-C₁₀)aralkyl optionally substituted with one or more of halogen, (C₁-C₄)alkyl or (C₁-C₄)alkoxy; or an aryl optionally substituted with one or more of halogen, nitro, (C₁-C₄)alkyl, (C₁-C₄)alkyl-acylamino, carb(C₁-C₄)alkoxy or sulfamyl; and X and X₁ is each independently hydrogen; halo or (C₁-C₄)alkyl.

In a further aspect the invention provides a method of stabilizing a 3-isothiazolone against chemical decomposition comprising incorporating therewith a carrier as defined above, preferably at a ratio of isothiazolone to carrier of from 0.1:99.9 to 10:90.

In a still further aspect of the invention there is provided a method of preventing or inhibiting the growth of bacteria, fungi or algae in a locus susceptible or subject thereto, comprising incorporating into or onto the locus, in an amount effective to adversely affect said growth, a composition as defined above.

The invention also comprises in one other aspect the use of a carrier as defined above to stabilize a 3-isothiazolone against chemical decomposition.

Any suitable ratio can be used, but we prefer a ratio of isothiazolone to carrier from about 0.1:99.9 to about 90:10 by weight, and more preferably from about 1.5:98.5 to about 25:75.

A particular advantage of the compositions of the invention is the removal of the requirement for any salt stabilizer in some cases. This is surprising and unexpected because salts are generally used with most commercial 3-isothiazolones to stabilize them. Compositions free of the presence of salt or stabilizer (other than the carrier itself) are especially preferred.

If desired, the composition can also include one or more additives selected from the group consisting of deodorant, dye, sequestrant, fragrance, tableting aid, surfactant, additional stabilizer, additional antimicrobial compound, dispersant, antisettling agent, and excipient.

As used herein, "stable" means that the compositions of the invention are stable for many months at room temperature, and for at least 3 days at 55°C as measured by retention of 3-isothiazolone compound.

The compositions of the invention can be in the form of a powder, bar, pellet, tablet, cast sheet or granules.

The compositions may be prepared by mixing a solution of the 3-isothiazolone in an organic solvent with the carrier and thereafter removing said solvent; mixing the isothiazolone and the carrier in the presence of water to form a slurry or a solution and thereafter removing the water by evaporation or spray drying.; melt blending the 3-isothiazolone and the carrier and thereafter molding or extruding said composition into a desired shape; or other suitable means.

The following examples are presented to illustrate a few embodiments of the invention. All parts and percentages are by weight unless otherwise indicated.

### Examples

### Example 1

8.6 grams of molten polyurethane polymer with alternating hydrophobic and hydrophilic blocks (QR 708, Rohm and Haas), was blended with 1.4 grams of melted 3-isothiazolone a 4:1 blend of 5-Cl-2- methyl-3-isothiazolone and 2-methyl-3-isothiazolone), by hand stirring. The molten material was spread out on the sides of the vessel to allow cooling to occur. The hardened product was then broken into flak-like particles.

### Example 2

In a manner similar to Example 1 18.2 g of the polyurethane and 0.22 g of oxyfluorfen were melted together on a steam bath. 1.62 g of molten isothiazolone was then blended in via hand stirring. Analysis of the product gave the following:

| | |
|---|---|
| oxyfluorfen | 0.93 % |
| 5-Cl-2-methyl-3 isothiazolone | 7.4 % |
| 2-methyl-3-isothiazolone | 1.3 % |

An analogous sample yielded the following heat aging results:

| | oxyfluorfen (%) | 5-Cl-2-methyl-3 isothiazolone (%) | 2-methyl-3-isothiazolone (%) |
|---|---|---|---|
| 0 Time | 0.34 | 6.2 | 1.3 |
| 2 wk/55°C | 0.33 | 5.9 | 1.3 |
| 4 wk/55⁰C | 0.35 | 3.3 | 1.3 |

Normally the unstabilized lifetime of 5-chloro-2-methyl-3-isothiazolone at 55⁰C is 2-3 days.

### Example 3

Following the procedure of Example 1 except using polyethyelene oxides of molecular weights ranging from 1450-20,000, (Carbowax, Union Carbide) in place of the polyurethane, the 2-n-octyl-3-isothiazolone was blended with the molten polyethylene oxides to yield solid formulations with AI between 9.5 and 12%.

### Example 4

Methylene chloride was used to swell/dissolve the polyurethane (QR-735, Rohm and Haas) so that the blending could be done at a lower temperature, 35°C. On cooling to RT the material hardened and the residual solvent was removed by evaporation.

### Example 5

Polyethylene oxide polymer (Polyox WSR 1105, Union Carbide), was suspended in an acetone solution of the 4:1 blend of 5-chloro-2-methyl-3-isothiazolone and 2-methyl-3-isothiazolone placed onto a Roto-Vap and the acetone stripped off. A product containing 4% AI was prepared. A sample was stored at 55°C for three days, which retained >75 % AI. A similar sample, prepared on sodium sulfate retained <25 % AI under the same conditions.

### Example 6

Additional examples of water soluble/swellable polymers were prepared according to the process in Example 5, and are shown in Table I. All these retained >75% AI upon storage at 55⁰C for three days.

**Table I**

| Additional Examples of Solid Carriers Which Display Stabilizing Function | |
|---|---|
| Polysaccharides | Potassium Alginate |
| | Karaya Gum |
| | Gum Tragacanth |
| Cellulosics | Hydroxypropyl methylcellulose (Methocel K4M, Dow) |
| | Methylcellullose (Methocel A15LV, Dow) |
| | Carboxymethyl cellulose (Ac-Di Sol) |
| Soluble Synthetic Polymers | p(maleic anhydride/methyl vinyl ether) (Gantrez AN-119 GAF) |
| | p(ethyleneoxide) (Polyox WRS 1105 & N-10, Union Carbide) |
| | p(methacrylic acid) (Tamol 731, Rohm and Haas) naphthalene |
| | sulfonate condensates (Tamol SN, Rohm & Haas |
| | Morwet EFW, DeSoto) |

## Claims

1. Composition comprising a 3-isothiazolone compound and a carrier and which stabilizes said 3-isothiazolone against chemical decomposition, said carrier being solid at room temperature, water soluble, and comprising one or more of polysaccharide polymer, derivatized cellulose polymers, polymers and copolymers of ethylene oxide and propylene oxide, polyurethane polymers having alternating hydrophobic and hydrophylic moieties, poly(maleic anhydride/methyl vinyl ether), polymerthacrylic acid, or naphthalene formaldehyde condensates.

2. Composition according to claim 1 wherein said 3-isothiazolone is of the formula 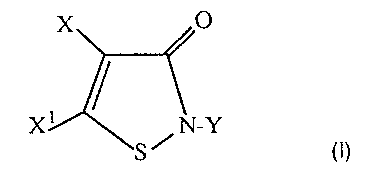 wherein
Y is a (C₁-C₁₈)alkyl or (C₃-C₁₂), preferably (C₅-C₈), cycloalkyl each optionally substituted with one or more of hydroxy, halo, cyano, alkylamino, dialkylamine, arylamino, carboxy, carbalkoxy, alkoxy, aryloxy, alkylthio, haloalkoxy, cycloalkylamino, carbamoxy, or isothiazolonyl; an unsubstituted or halo-substituted (C₂-C₈), preferably (C₂-C₄) alkenyl or alkynyl; a (C₇-C₁₀)aralkyl optionally substituted with one or more of halogen, (C₁-C₄)alkyl or (C₁-C₄)alkoxy; or an aryl optionally substituted with one or more of halogen, nitro, (C₁-C₄)alkyl, (C₁-C₄)alkylacylamino, carb(C₁-C₄)alkoxy or sulfamyl; and X and X₁ is each independently hydrogen, halo or (C₁-C₄)alkyl;

3. Composition according to any preceding claim wherein the ratio of isothiazolone to carrier is from 0.1:99.9 to 90:10 by weight, preferably from 1.5:98.5 to 25:75 by weight.

4. Composition according to any preceding claim which is free of salt, and/or free of stabilizer other than said carrier.

5. Composition according to any one of claims 1 to 3, further comprising one or more of deodorant, dye, fragrance, sequestrant, tableting aid, surfactant, additional stabilizer, additional antimicrobial compound, dispersant, antisettling agent, or excipient.

6. Method of preparing a composition according to any preceding claim comprising either: a) mixing a solution of isothiazolone in an organic solvent with carrier and thereafter removing said solvent; or b) mixing isothiazolone and carrier in the presence of water to form a slurry or a solution and thereafter removing the water by evaporation or spray drying; or c) melt blending isothiazolone and carrier and thereafter moulding or extruding said composition into a desired shape.

7. Method of stabilizing a 3-isothiazolone against chemical decomposition comprising incorporating therewith a carrier as defined in claim1, preferably at a ratio of isothiazolone to carrier of from 0.1:99.9 to 90:10,and more preferably at a weight ratio of from 1.5:98.5 to 25:75.

8. Method of preventing or inhibiting the growth of bacteria, fungi or algae in a locus susceptible or subject thereto, comprising incorporating into or onto the locus, in an amount effective to adversely affect said growth, a composition according to any one of claims 1 to 5.

9. Use of a carrier as defined in claim 1 to stabilize a 3-isothiazolone against chemical decomposition.

## Patentansprüche

1. Zusammensetzung enthaltend eine 3-Isothiazolonverbin-dung und einen Träger, der das 3-Isothiazolon gegen chemische Zersetzung stabilisiert, wobei der Träger bei Raumtemperatur fest und wasserlöslich ist und eines oder mehrere von Polysaccharidpolymeren, Abkömmlingen von Cellulosepolymeren, Polymere und Copolymere von Ethylenoxid und Propylenoxid, Polyurethanpolymere mit alternierenden hydrophoben und hydrophilen Gruppen, Poly(maleinsäureanhydrid/methylvinylether), Polymethacrylsäure oder Naphthalinformaldehydkondensate enthält.

2. Zusammensetzung nach Anspruch 1,
**dadurch gekennzeichnet,**
daß das 3-Isothiazolon der Formel genügt: 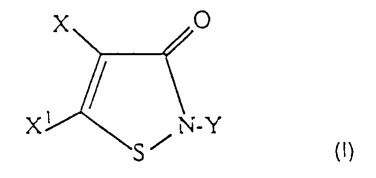 in der Y eine (C₁-C₁₈ )-Alkylgruppe oder (C₃-C₁₂)-, vorzugsweise (C₅-C₈)-Cycloalkylgruppe ist, jeweils gegebenenfalls substituiert mit einem oder mehreren von Hydroxy, Halogen, Cyano, Alkylamino, Dialkylamin, Arylamino, Carboxy, Carbalkoxy, Alkoxy, Aryloxy, Alkylthio, Haloalkoxy, Cycloalkylamino, Carbamoxy oder Isothiazolonyl eine unsubstituierte oder halogensubstituierte (C₂-C₈)-, vorzugsweise (C₂-C₄)-Alkenylgruppe oder Alkynylgruppe, eine (C₇-C₁₀)-Aralkylgruppe ist, gegebenenfalls substituiert mit einem oder mehreren von Halogen, (C₁-C₄)-Alkyl oder (C₁-C₄)-Alkoxy, oder eine Arylgruppe ist, gegebenenfalls substituiert mit einem oder mehreren von Halogen, Nitro, (C₁-C₄)-Alkyl, (C₁-C₄)-Alkylacylamino, Carb(C₁-C₄)-alkoxy oder Sulfamyl, und X und X₁ jeweils unabhängig Wasserstoff, Halogen oder (C₁-C₄)-Alkyl ist.

3. Zusammensetzung nach einem der vorstehenden Ansprüche,
**dadurch gekennzeichnet,**
daß das Gewichtsverhältnis von Isothiazolon:Träger von 0,1:99,9 bis 90:10, vorzugsweise von 1,5:98,5 bis 25:75 beträgt.

4. Zusammensetzung nach einem der vorstehenden Ansprüche,
**dadurch gekennzeichnet,**
daß sie salzfrei und/oder frei von Stabilisatoren, außer dem Träger, ist.

5. Zusammensetzung nach einem der vorstehenden Ansprüche 1 bis 3,
**dadurch gekennzeichnet,**
daß sie weiterhin eines oder mehrere von Deodorant, Farben, Aromastoffen, Komplexbildnern, Tablettierungshilfsmitteln, oberflächenaktiven Mitteln, zusätzlichem Stabilisator, zusätzlicher antimikrobieller Verbindung, Dispergiermittel, Antiabsetzmittel oder Arzneimittelträger enthält.

6. Verfahren zum Herstellen einer Zusammensetzung nach einem der vorstehenden Ansprüche durch entweder: a) Mischen einer Lösung von Isothiazolon in einem organischen Lösemittel mit dem Träger und anschließendes Entfernen des Lösemittels oder b) Mischen von Isothiazolon und Träger in Gegenwart von Wasser, um eine Aufschlämmung oder Lösung auszubilden, und anschließendes Entfernen des Wassers durch Verdampfen oder Sprühtrocknen oder c) Schmelzmischen von Isothiazolon und Träger und anschließendes Formen oder Extrudieren der Zusammensetzung in die gewünschte Form.

7. Verfahren zum Stabilisieren eines 3-Isothiazolons gegen chemische Zersetzung durch Einbringen des Isothiazolons in einen Träger, wie in Anspruch 1 angegeben, vorzugsweise mit einem Gewichtsverhältnis Isothiazolon: Träger von 0,1:99,9 bis 90:10, bevorzugter in einem Gewichtsverhältnis von 1,5:98,5 bis 25:75.

8. Verfahren zum Verhindern oder Hemmen des Wachstums von Bakterien, Pilzen oder Algen an einem Ort, der empfindlich dagegen oder damit befallen ist, durch Aufbringen auf oder Einbringen in den Ort einer wirksamen Menge einer Zusammensetzung nach einem der Ansprüche 1 bis 5, um das Wachstum gegenteilig zu beeinflussen.

9. Verwendung eines Trägers nach Anspruch 1, um ein 3-Isothiazolon gegen chemische Zersetzung zu stabilisieren.

## Revendications

1. Composition comprenant un composé de type 3-isothiazolone et un véhicule, et qui stabilise ladite 3-isothiazolone vis-à-vis de la décomposition chimique, ledit véhicule étant solide à la température ambiante, hydrosoluble, et comprenant un ou plusieurs composés parmi les polymères polysaccharidiques, les dérivés de polymères cellulosiques, les polymères et les copolymères d'oxyde d'éthylène et d'oxyde de propylène, les polymères de polyuréthane ayant des groupements hydrophobes et hydrophiles alternés, le poly(anhydride maléique /méthyl-vinyléther), l'acide polyméthacrylique, ou les condensats de naphtalène formaldéhyde.

2. Composition selon la revendication 1, dans laquelle ladite 3-isothiazolone est de formule 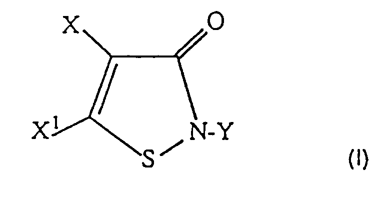 dans laquelle Y est un groupe alkyle en C₁-C₁₈ ou cycloalkyle en C₃-C₁₂, de préférence en C₅-C₈, chacun éventuellement substitué par un ou plusieurs groupes choisis parmi les hydroxy, halogéno, cyano, alkylamino, dialkylamine, arylamino, carboxy, carbalcoxy, alcoxy, aryloxy, alkylthio, halogénoalcoxy, cycloalkylamino, carbamoxy, ou isothiazolonyle; un groupe alcényle ou alcynyle en C₂-C₈, de préférence en C₂-C₄,_{,} non substitué ou halogéno-substitué ; un groupe aralkyle en C₇-C₁₀ éventuellement substitué par un ou plusieurs groupes choisis parmi les halogèno, alkyle en C₁-C₄ ou alcoxy en C₁-C₄; ou un groupe aryle éventuellement substitué par un ou plusieurs groupes choisis parmi les halogèno, nitro, alkyle en C₁-C₄, alkyl-acylamino en C₁-C₄, carb(alcoxy en C₁-C₄) ou sulfamyle; et X et X¹ sont chacun indépendamment un atome d'hydrogène, ou un groupe halogèno ou alkyle en C₁-C₄.

3. Composition selon l'une quelconque des revendications précédentes, dans laquelle le rapport de l'isothiazolone au véhicule est de 0,1:99,9 à 90:10 en poids, de préférence de 1,5:98,5 à 25:75 en poids.

4. Composition selon l'une quelconque des revendications précédentes, qui est dépourvue de sel et/ou de stabilisant autre que ledit véhicule.

5. Composition selon l'une quelconque des revendications 1 à 3, comprenant en outre un ou plusieurs ingrédients choisis parmi les déodorants, colorants, parfums, agents séquestrants, auxiliaires de pastillation, tensioactifs, stabilisants additionnels, composés antimicrobiens additionnels, dispersants, agents de suspension, ou excipients.

6. Procédé de préparation d'une composition selon l'une quelconque des revendications précédentes qui consiste, soit : a) à mélanger une solution d'isothiazolone dans un solvant organique avec le véhicule et ensuite à éliminer ledit solvant; soit b) à mélanger l'isothiazolone et le véhicule en présence d'eau pour former une suspension ou une solution et ensuite à éliminer l'eau par évaporation ou par séchage par pulvérisation; soit c) à mélanger par fusion l'isothiazolone et le véhicule et ensuite à mouler ou à extruder ladite composition dans la forme souhaitée.

7. Procédé de stabilisation d'un composé de type 3-isothiazolone vis-à-vis de la décomposition chimique, qui consiste à y incorporer un véhicule selon la revendication 1, de préférence dans un rapport de l'isothiazolone au véhicule de 0,1:99,9 à 90:10, et plus particulièrement, dans un rapport pondéral de 1,5:98,5 à 25:75.

8. Procédé de prévention ou d'inhibition de la croissance des bactéries, champignons ou algues en un lieu exposé ou sujet à cette croissance, qui consiste à incorporer dans ou sur ce lieu, une composition selon l'une quelconque des revendications 1 à 5, en une quantité efficace pour affecter négativement ladite croissance.

9. Utilisation d'un véhicule selon la revendication 1 pour stabiliser un composé de type 3-isothiazolone vis-à-vis de la décomposition chimique.
